# EUROPEAN PATENT APPLICATION

(11) **EP 4 597 799 A1**
(43) Date of publication of application: **06.08.2025**
(21) Application number: 24154667.0
(22) Date of filing: 30.01.2024
(51) Int. Cl.: H02K 3/24, H02K 9/06, H02K 7/18, F03D 9/25, F03D 80/60, H02K 9/04

(54) **COOLING TECHNIQUE TO REDUCE GENERATOR HOT SPOT IN DIRECT DRIVE PERMANENT MAGNET WIND TURBINES**

(71) Applicant: Siemens Gamesa Renewable Energy A/S, 7330 Brande (DK)
(72) Inventor: Nilifard, Reza, 7400 Herning (DK)
(74) Representative: SGRE-Association

(57) **Abstract**

The present invention describes a generator (100) for a wind turbine, comprising a rotor device (101) rotatable around a rotary axis (107), a stator device (102) comprising a winding arrangement (103),wherein between an axial end of the stator device (102) and the rotor device (101) a cooling volume is formed, and an air guiding arrangement (120) arranged within the cooling volume for separating the cooling volume into a radial inner section (112) and a radial outer section (113). The air guiding arrangement (120) forms an air inlet opening (104), such that cooling air (111) is flowable from the radial inner section (112) against the air guiding arrangement (120) and through the air inlet opening (104) into the radial outer section (113), wherein the winding arrangement (103) extends from the axial end of the stator into the radial outer section (113).

## Description

### Field of the invention

The present invention relates to a generator for a wind turbine comprising an air guiding arrangement and to a method of operating the generator.

### Art background

In wind turbines large generators comprising an inner stator surrounded by an outer rotor are installed. The generators may be direct drive (DD) permanent magnet (PM) generators without using e.g. gear devices, so that higher torque densities result in a higher wind turbine output power. However, on the other hand, it can also result in higher operating temperatures due to further losses generated in the stator copper. In high torque and low speed PM generators, the stator windings accounts for most losses. Therefore, the increase of output in the generators is mainly limited by the temperature of stator windings.

Until now, in generators used in wind turbines forced air-cooling system are applied. Cool air enters the generator from the non-drive end (NDE) and drive end (DE) sides, and after passing over the stator winding heads, it enters an axial gap between the rotor and the stator and is distributed between a number of radial air ducts in the stator body to remove heat.

However, due to the complex geometry of the stator winding heads in distributed winding (DW) as well as the large chamber volume on the NDE and DE side, the cooling air flow has a much smaller contact surface with the winding heads and less heat dissipation occurs from the winding heads to cooling air. Therefore, it affects the cooling performance and causes a significant increase in the temperature of the winding heads.

Hence, there may be a need to improve cooling efficiency of the windings and the winding heads.

### Summary of the invention

It may be an object of the present invention to provide a generator with an improved cooling efficiency of the windings and the winding heads.

In order to achieve the object defined above, a generator for a wind turbine and a method of operating the generator according to the independent claims is presented.

According to a first aspect a generator for a wind turbine is described. The generator comprises a rotor device rotatable around a rotary axis, and a stator device comprising a winding arrangement. Between an axial end of the stator device and the rotor device a cooling volume (chamber) is formed.

The generator further comprises an air guiding arrangement arranged within the cooling volume for separating the cooling volume into a radial inner section and a radial outer section, wherein the air guiding arrangement forms an air inlet opening, such that cooling air is flowable from the radial inner section against the air guiding arrangement and through the air inlet opening into the radial outer section. The winding arrangement extends (and protrudes) from the axial end of the stator into the radial outer section.

According to a further aspect, a method of operating a generator for a wind turbine as described above is presented. The method comprises providing cooling air flowing from the radial inner section against the air guiding arrangement and through the air inlet opening into the radial outer section.

According to an aspect, a wind turbine with the above described generator is presented. The generator may be installed in onshore or offshore wind turbines having e.g. a power range of 1 to 50 Megawatts or more. The rotor device comprises the respective part of the generator that rotates around the rotary axis and which parts are movable. In direct drive wind turbines, the hub of the wind turbine to which the blades are mounted, is directly coupled to the rotor device. The rotor device may be an outer rotor device and may comprise a cylindrical rotor housing and a plurality of magnet means being arranged at an inner surface of the rotor housing in several rows extending parallel to an axis of rotation of the rotor.

The stator device comprises the respective parts of the generator that are non-movable. Specifically, the stator device comprises the winding arrangement. In an exemplary embodiment, the stator device may be an outer status surrounding and inner rotatable rotor device. In another exemplary embodiment, specifically in direct drive wind turbines, the generator comprises an inner stator as stator device surrounded by an outer rotor as rotor device.

The rotary axis of the rotor defines the axial direction of the generator. A radial direction is defined perpendicular to the axial direction and crossing the rotary axis. The circumferential direction is defined perpendicular to the axial direction and the radial direction.

The winding arrangement comprises respective conductive coils, for example made of copper, that extend within slots in the surface of the stator device. At axial ends of the stator device, the winding arrangement extends into a volume of the radial outer section. Specifically, a section of the winding of the winding arrangement leaves the stator device at an axial end and another section of the winding arrangement enters the stator device. A loop of the winding outside of the stator device is denoted as a "winding head".

In an exemplary embodiment of a stator device, a plurality of windings of the winding arrangement are arranged side by side along the circumferential direction. In another exemplary embodiment of the stator device, a so-called distributed winding generator may be provided. That means, that for example three windings are interleaved so that a winding head of one winding partially surrounds a section of another winding head outside of the stator device.

The cooling volume is formed between an axial end of the stator device and the rotor device. In a closed air cooling system, cooling air may be injected from the stator device into the cooling volume in order to cool the winding arrangement, specifically the winding heads, extending into the cooling volume. In an open cooling system, cooling air may be injected from outside of the stator device into the cooling volume, e.g. from a radially inner location into the cooling volume. In a closed cooling circuit (closed loop), cooling air is circulated inside the generator and a heat exchanger at the fan inlet may be arranged to remove heat absorbed from the generator. In an open loop (open cooling system, direct cooling system), the cooling air is coming directly from ambient (e.g. can be sucked from nacelle or directly from ambient) and goes into generator. The air may be injected into an airgap and into the cooling volume, respectively, between the rotor device and the stator device and distributes between radial airducts in stator. Finally, it goes into exhaust fan and streaming out into ambient.

According to the approach of the present invention, the cooling air streaming into the cooling volume is directed and focused to the winding arrangement by the air guiding arrangement. The air guiding arrangement is arranged within the cooling volume and separates the cooling volume in a radial inner section and in a radial outer section. The cooling air is injected from the stator device into the radial inner section. The winding arrangement extends from the stator device into the radial outer section. Hence, the cooling air flows from the stator device and the radial inner section against the air guiding arrangement before entering the radial outer section.

As described in more detail below, the air guiding arrangement may comprise air deflection sheets or air guiding surfaces for guiding the air which streams against the air guiding arrangement the direction from the radial inner section to the radial outer section. Specifically, the air guiding arrangement forms an air inlet opening. The air inlet opening defines a reduced and smallest flow diameter and a narrowing opening (smallest flow area), respectively, so that a nozzle effect may be generated by the air guiding arrangement. Hence, by separating the cooling volume in a radial inner and outer section and by providing an air inlet opening forming a narrow flow diameter, a nozzle effect is generated which generates a result accelerated streaming velocity of the cooling air on the one side and on the other side vortexes of the cooling air in the radial outer section. Additionally, the air guide arrangement comprising vanes and air deflection sheets, respectively, directs cooling air to the winding head. Therefore, the contact surface between the winding head and the cooling air increases. As a result, the heat transfer increases and thereby the coil temperature decreases.

As a result, the cooling efficiency of the cooling air is increased, so that also the generator power and efficiency increase as well. A number of thermal tests were conducted which show, that by using the air guiding arrangement providing the air inlet opening cooling efficiency of the winding heads is reduced in comparison to tests without using an air guiding arrangement according to the present invention.

Hence, by the present invention and increase of cooling system performance provided which has a positive impact on the maximum output from wind turbine generator. Furthermore, lower winding temperatures increase the generator component lifespan and result in higher generator efficiency and reliability, especially the lifetime of the winding insulation.

The air guiding arrangement may comprise metallic material, such as Aluminum or Steel (e.g. stainless steel). However, also plastic or fiberglass material may be used. The thickness of the guide vane elements of the air guiding arrangement, such as the stator guiding structure/sheet, the rotor air deflection sheets or the rotor air guiding surface may have a thickness of about 1mm or 2mm. The rotor air deflection sheets or the rotor air guiding surface may also have a thickness of more than 2mm.

According to an exemplary embodiment, the air guiding arrangement comprises a stator guiding structure extending from the stator device in the direction to the rotor device, wherein the stator guiding structure is mounted to the stator device in particular between the radial inner section and the radial outer section. Specifically, the stator guiding structure is mounted to the axial surface of the stator device.

An axial surface may be defined by a surface that comprises a normal having directional component in axial direction and is in particular parallel to the axial direction. The stator guiding structure is arranged between an air inlet of the cooling air into the cooling volume and the winding arrangement, so that the stator guiding structure separates the radial inner section from the radial outer section and contributes to form a narrow flow diameter and the air inlet opening, respectively. The stator guiding structure defines a structure that extends from the stator device and thereby forms a flow barrier for the air streaming from the radial inner section to the radial outer section. Hence, the cooling air streams into the radial inner section, further against the stator guiding structure and through the air inlet opening so that a nozzle effect and turbulences and vortexes in the radial outer section is generated.

The stator air guiding structure, for example the stator air deflection sheet may be fixed to the stator device by magnet connection, bolts, glueing or welding. Specifically, the stator air guiding structure may be bolted to stator device.

According to a further exemplary embodiment, the stator guiding structure comprises a stator air deflection sheet extending from an axial surface of the stator device, wherein the stator air deflection sheet comprises an angle to the axial surface of the stator device between 45° to 135°, in particular between 60° and 120°, more in particular 90°. The stator air deflection sheet may form a straight platelike element extending in a respective plane. Alternatively, the stator air deflection sheet may comprise a curved shape following the circumferential direction (and having for example a centre of radius of curvature at the rotary axis). Furthermore, one or a plurality of further stator air deflection sheet extending from the axial surface of the stator device may be provided, wherein the further stator air deflection sheet comprises an angle to the axial surface of the stator device between 45° to 135°, in particular between 60° and 120°, more in particular 90°. The further stator air deflection sheets may be spaced apart from the stator air deflection sheet along the radial direction.

According to a further exemplary embodiment, the stator air deflection sheet extends in circumferential direction around the stator device, wherein the stator air deflection sheet forms a circumferential ring structure.

According to a further exemplary embodiment the stator air deflection sheet comprises a plurality of sheet sections arranged spaced apart from each other along the circumferential direction. As described above, the stator air deflection sheet sections may form straight platelike elements extending in a respective plane. Alternatively, the stator air deflection sheet sections may comprise curved shapes following the circumferential direction. Specifically, the stator air deflection sheets may be mounted along the radial direction above a respective air outlet of the stator device, through which air streams into the radial inner section. In other words, the stator air deflection sheets may be mounted between the air outlet of the stator device and the winding heads, so that the cooling air streams first against the stator air deflection sheet sections before streaming against the winding heads.

According to a further exemplary embodiment, the stator air deflection sheet extends parallel to an end face of a winding head of a winding of the stator device to form an air flow channel between the end face and the stator air deflection sheet. The end face of the winding head defines the face of a winding that has the largest distance to the axial end face of the stator device, where the winding section leave the stator device. In other words, the end face of a winding head extends along the circumferential direction and forms the winding loop and connects the two winding sections running along the stator device. Hence, the stator air deflection sheet fully or partially covers at a certain distance the end face of a winding head such that a small gap forming an airflow channel is formed and hence a further nozzle effect for improving the air streaming through the airflow channel is provided. Thereby, cooling efficiency can be improved.

According to a further exemplary embodiment, the air guiding arrangement comprises a rotor guiding structure, wherein the rotor guiding structure extends in a direction from the rotor device in the direction to the stator device. The rotor guiding structure is arranged between the radial inner section and the radial outer section.

The rotor guiding structure may be arranged between an air inlet of the cooling air into the cooling volume and the winding arrangement, so that the rotor guiding structure separates the radial inner section from the radial outer section and contributes to form a narrow flow diameter and the air inlet opening, respectively. The rotor guiding structure defines a structure that extends from the rotor device and thereby forms a flow barrier for the air streaming from the radial inner section to the radial outer section. Hence, the cooling air streams into the radial inner section, further against the rotor guiding structure and through the air inlet opening so that a nozzle effect and more turbulences and vortexes in the radial outer section is generated.

The rotor air guiding structure, for example the rotor air guiding surface and the rotor air deflection sheet may be fixed to the rotor device or to the fixing structure by magnet connection, bolts, glueing or welding. Specifically, the rotor air guiding structure may be bolted to rotor device or to the fixing structure.

According to a further exemplary embodiment, the rotor guiding structure is mounted to the rotor device and is rotatable together with the rotor device. Hence, the rotor guiding structure rotates together with the rotor device. Thereby, the rotor guiding structure may also generate turbulences in the cooling air caused by the rotation of the rotor guiding structure.

According to a further exemplary embodiment, the rotor guiding structure is mounted to a non-movable fixing structure of the generator. However, from the supporting platform to which the generator is stored, a fixing structure may extend inside the cooling volume in order to provide a support for the rotor guiding structure. Hence, vibrations and other negative states to the rotor guiding structure caused by movement and rotation of the rotor guiding structure will not be caused.

According to a further exemplary embodiment, the rotor guiding structure comprises a rotor air deflection sheet extending from an axial surface of the rotor device (or of a static fixing structure) in the direction to the stator device, wherein the rotor air deflection sheet comprises an angle to the axial surface (and/or to the radial direction) of the rotor device between 45° to 135°, in particular 60° and 120°, more in particular 90°. The rotor air deflection sheet may form a straight platelike element extending in a respective plane. Alternatively, the rotor air deflection sheet may comprise a curved shape following the circumferential direction (and having for example a centre of radius of curvature at the rotary axis). The axial surface of the rotor device may be a surface of a housing of the rotor device, rotating around the rotary axis. The axial surface may also be a surface of a static fixing structure being non-movable around the rotary axis. The axial surface may be parallel to a radial plane having a normal in axial direction.

According to a further exemplary embodiment, the rotor guiding structure comprises a rotor air guiding surface extending from the rotor air deflection sheet in a radial direction in such a way that the rotor air guiding surface is arranged spaced apart from an end face of a winding head of a winding to form an air flow channel between the end face of the winding head and the rotor air guiding surface.

The rotor air guiding surface that extends from the rotor air deflection sheet in a radial outer direction so as to partially envelope an end face of the winding head such that an air channel is formed between the air guiding surface and the end face. Hence, air passing the air inlet opening is further guided through the air channel between the rotor air guiding surface and a respective end face of a winding head. The rotor air guiding surface may be formed of a sheetlike element comprising a flat or curved surface shape. The rotor air guiding surface extends along the circumferential direction to provide an air guiding area. The rotor air guiding surface may be separated in sections in particular in radial direction or may form a kind of circular ring surface having a curvature axis parallel to the circumferential direction.

According to a further exemplary embodiment, the rotor air guiding surface has a curved shape such that the distance to the end face varies along the radial direction. Hence, if the end face forms a flat straight surface and the rotor air guiding surface has a curved shape, the distance at edge sections of the end face are closer to the rotor air guiding surface than the centre section of the end face between the edge sections.

According to a further exemplary embodiment, the rotor air guiding surface is formed parallel with respect to the end face of the winding closest to the rotor air guiding surface. Hence, a straight air guiding channel may be formed between the end face of a winding head and the rotor air guiding surface.

According to a further exemplary embodiment, the rotor guiding structure comprises a further rotor air guiding surface arranged at a radial outer end of the rotor air guiding surface. The further rotor air guiding surface may be arranged spaced apart from a further end face of a further winding head of a further winding to form a further air flow channel between the further end face and the further rotor air guiding surface. In other words, the further rotor air guiding surface is arranged closer to the axial surface of the rotor device than the rotor air guiding surface. Hence, the rotor air guiding surface and the further rotor air guiding surface may form together an inner air guiding wall between the rotor air guiding sheet and the radial outer end of the radial outer section of the cooling volume. The rotor air guiding surface and the further rotor air guiding surface may comprise an angle between each other of 90° and 180°, in particular 135° or 150° to 170°.

Specifically, the rotor air guiding surface may be arranged parallel with respect to an end face of a (40° to 50°, in particular 45°) winding head and the further rotor air guiding surface may be arranged parallel with respect to a further end face of a further (-5° to 5°, in particular 0°) winding head. Hence, a proper air guidance along the radial direction and along the interfaces of the winding heads can be provided.

According to a further exemplary embodiment, the rotor air guiding surface and the further rotor air guiding surface form together an overall curved surface passing the end face of the winding head and the further end face of the further winding head, such that air is flowable through the air inlet opening and further along the overall curved surface.

According to a further exemplary embodiment, the rotor guiding structure comprises a further rotor air deflection sheet being arranged spaced apart from the rotor air deflection sheet in radial direction. The further rotor air deflection sheet may extend from the axial surface of the rotor device (or of a static fixing structure) in such a way that the further rotor air deflection sheet is arranged spaced apart from a further end face of a further winding head to form a further air flow channel between the further end face of the further winding head and the further rotor air deflection sheet. The further rotor air deflection sheet comprises an angle to the axial surface of the rotor device between 45° to 135°, in particular 60° and 120°, more in particular 90°. The further rotor air deflection sheet may form a straight platelike element extending in a respective plane. Alternatively, the rotor air deflection sheet may comprise a curved shape following the circumferential direction (and having for example a centre of radius of curvature at the rotary axis).

In an exemplary embodiment, a three or four rotor air deflection sheets may be provided, wherein the rotor air deflection sheets are arranged spaced apart from each other along the radial direction. The rotor air deflection sheets extend from the axial surface of the rotor device (or of a static fixing structure) in such a way that each rotor air deflection sheet is arranged spaced apart from a further end face of a further winding head to form a further air flow channel between the respective further end face of the further winding head and the respective further rotor air deflection sheet. Accordingly, to each winding head a respective rotor air deflection sheet may be provided.

Hence, each rotor air deflection sheet may comprise a free end closest to a respective end face so that between the end face and the free end of the respective rotor air deflection sheet a narrow streaming diameter for the cooling air is formed and hence a nozzle effect is provided. Thereby, the cooling efficiency of the cooling air is increased.

However, also four or more rotor air deflection sheets may be provided, so that e.g. more rotor air deflection sheets than winding heads may be present and may thus be provided independently from the winding heads.

According to a further exemplary embodiment, the further rotor air deflection sheet has a different, in particular a shorter, length (in axial direction) than the rotor air deflector sheet. Hence, if a (-5° to 5°, in particular 0°) winding head extends more in axial direction to the radial outer section than a (40° to 50°, in particular 45°) winding head, the respective rotor air deflection sheet having a free end at the (40° to 50°, in particular 45°) winding head is longer in axial direction than the rotor air deflection sheet closest to the (-5° to 5°, in particular 0°) winding head. Specifically, the length of a radially inner rotor air deflection sheet may be longer (i.e. along the axial direction) with respect to a length of a radially outer rotor air deflection sheet. Hence, a constant distance between the respective free and of a respective rotor air deflection sheet to a respective end face can be provided with respect to another spaced apart free end of the respective rotor end deflection sheet to another end face.

The rotor air deflection sheets may be formed parallel with respect to each other and may have the above-described angle to the axial surface of the rotor device between 45° to 135°, in particular between 60° and 120°, more in particular 90°.

Alternatively, an angle between e.g. two radially adjacent rotor air deflection sheets may differ between each other.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 shows a schematic view of a generator showing the non-drive end and the drive end according to an exemplary embodiment of the present invention.
Fig. 2A shows a schematic view of a generator having three parallel rotor air deflection sheets according to an exemplary embodiment of the present invention.
Fig. 2B shows a schematic view of a generator having four rotor air deflection sheets being partially non-parallel to each other according to an exemplary embodiment of the present invention.
Fig. 3 shows a schematic view of a generator having several rotor air guiding surfaces according to an exemplary embodiment of the present invention.
Fig. 4 shows a perspective view of the generator of Fig. 3.
Fig. 5 shows a schematic view of a generator having a curved rotor air guiding surface according to an exemplary embodiment of the present invention.
Fig. 6 shows a schematic view of a wind turbine having a generator according to an exemplary embodiment of the present invention.

### Detailed Description

The illustrations in the drawings are schematically. It is noted that in different figures, similar or identical elements are provided with the same reference signs.

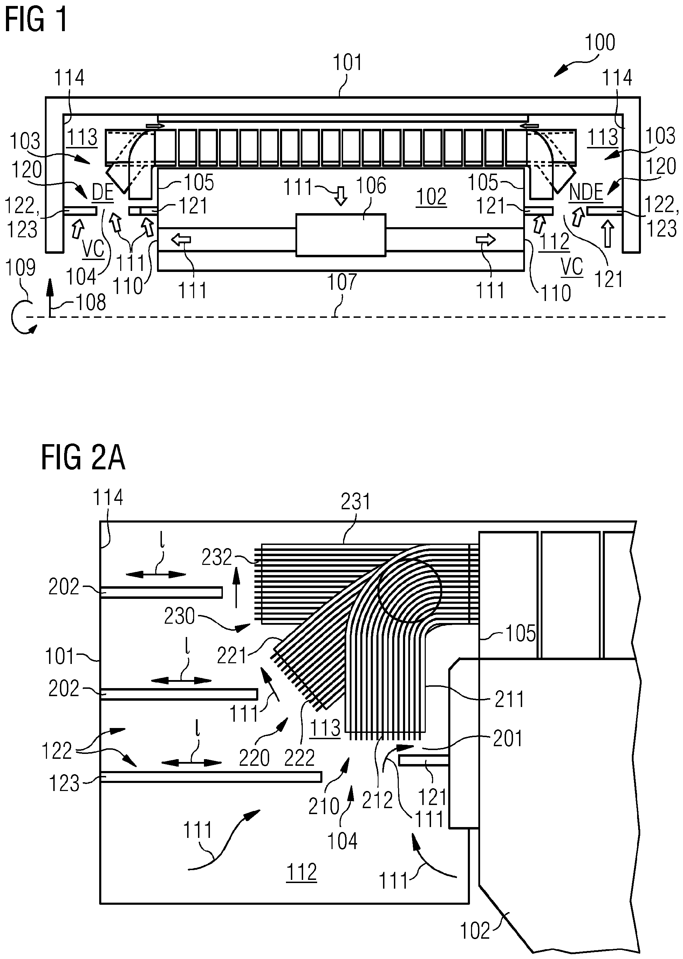

**Fig. 1** shows a schematic view of a generator 100 showing the non-drive end NDE and the drive end ND according to an exemplary embodiment of the present invention.

In the generator 100, closed loop forced air-cooling system are used. Inside the stator device 102 a fan 106 is installed for driving the cooling air 111. At the inlet of a fan 106 there may also a heat exchanger be installed to transfer heat from cooling air to liquid (coolant) for removing heat. The cooling air 111 enters via cooling air outlets 110 in the stator device 102 cooling volumes Vc at the drive end DE side and the non-drive end NDE side. At the drive end DE side and the non-drive end NDE side a respective cooling volume Vc between the respective axial end of the stator device 102 and the rotor device 101 is formed.

After passing over the winding arrangement 103, the cooling air 111 enters a gap between a radial outer end of the stator device 102 and the rotor device 101 and is distributed between a number of radial air ducts in the stator device 102 to remove heat.

However, due to the complex geometry of the winding arrangement 103 the cooling volume is very large on the drive end DE side and the non-drive end NDE side.

Therefore, according to an embodiment of the present invention, in Fig. 1 a generator 100 is shown comprising a rotor device 101 rotatable around a rotary axis 107 and a stator device 102 comprising a winding arrangement 103, wherein between an axial end of the stator device 102 and the rotor device 101 a cooling volume is formed (i.e. at the DE and NDE side). According to the present invention an air guiding arrangement 120 is arranged within the cooling volume Vc for separating the cooling volume into a radial inner section 112 and a radial outer section 113. The air guiding arrangement 120 forms an air inlet opening 104, such that cooling air 111 is flowable from the radial inner section 112 against the air guiding arrangement 120 and through the air inlet opening 104 into the radial outer section 113, wherein the winding arrangement 103 extends from the axial end of the stator into the radial outer section 113.

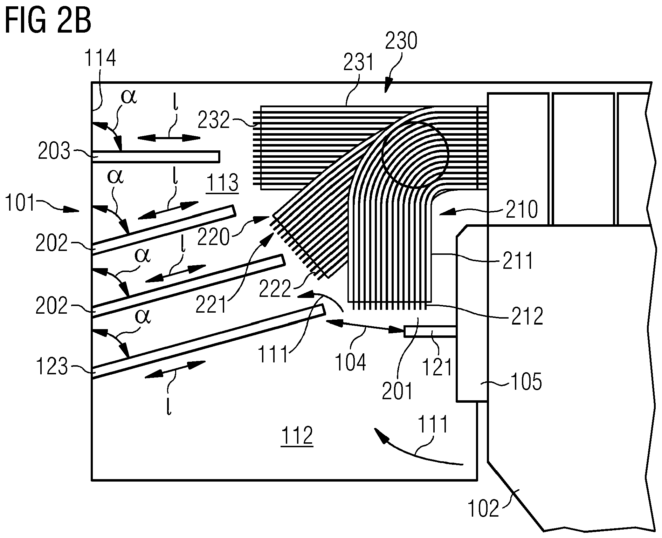

The cooling volume Vc is formed between an axial surface 105 of the stator device 102 and the rotor device 101. Cooling air 111 may be injected from the stator device 102 into the cooling volume Vc via cooling air outlets 110 in order to cool the winding arrangement 120, specifically the winding heads (211, 221, 231 in Fig. 2), extending into the cooling volume Vc.

The cooling air streaming into the radial inner section 112 is directed and focused to the winding arrangement 120 by the air guiding arrangement 120 which extends from the stator device 102 into the radial outer section 113. Hence, the cooling air 111 flows from the stator device 102 and the radial inner section 112 against the air guiding arrangement 120 before entering the radial outer section 113.

The air guiding arrangement 120 in Fig. 1 comprises air deflection sheets (e.g. a rotor guiding structure 122 formed by a rotor air deflection element 123 and a stator guiding structure 121). Cooling air 111 streams against the air guiding arrangement 120 in the direction from the radial inner section 112 to the radial outer section 113. Specifically, the air guiding arrangement 120 forms an air inlet opening 104. The air inlet opening 104 defines a reduced and smallest flow diameter (at least in axial direction 108) and a narrowing opening (smallest flow area), respectively, so that a nozzle effect may be generated by the air guiding arrangement 120. Hence, by separating the cooling volume Vc in a radial inner and outer section 112, 113 and by providing an air inlet opening 104 forming a narrow flow diameter, a nozzle effect is generated which generates a result accelerated streaming velocity of the cooling air 111 on the one side, and on the other side vortexes of the cooling air in the radial outer section. This increases also the contact surface between the cooling air and the winding heads. As a result, heat transfer increases and the winding heads temperature decreases.

The stator guiding structure 121 is formed of a stator guiding sheet extending from the axial surface 105 of the stator device 102 in the direction to the rotor device 101, wherein the stator guiding structure 121 is mounted to the stator device 102 between the radial inner section 112 and the radial outer section 113. The stator guiding structure 121 is arranged between an air inlet 110 of the cooling air 111 and the winding arrangement 120, so that the stator guiding structure 121 separates the radial inner section 112 from the radial outer section 113 and contributes to form a narrow flow diameter and the air inlet opening, respectively. The stator guiding structure 121 forms a flow barrier for the air streaming from the radial inner section 112 to the radial outer section 113. Hence, the cooling air 111 streams into the radial inner section 112, further against the stator guiding structure 112 and through the air inlet opening 104 so that a nozzle effect and more turbulences and vortexes in the radial outer section is generated.

The stator air deflection sheet of the stator guiding structure 121 may be as shown in Fig. 1 extend from the axial surface 105 of the stator device 102 and comprises an angle to the axial surface 105 of the stator device 102 of 90°. The stator air deflection sheet may form a straight platelike element. The stator air deflection sheet may extend in circumferential direction 109 around the stator device 102, wherein the stator air deflection sheet forms e.g. a circumferential ring structure. Alternatively, the stator air deflection sheet comprises a plurality of sheet sections arranged spaced apart from each other along the circumferential direction 109.

Furthermore, the air guiding arrangement 120 comprises a rotor guiding structure 122, wherein the rotor guiding structure 122 extends in a direction from the rotor device 101 in the direction to the stator device 102. The rotor guiding structure 122 is arranged between the radial inner section 112 and the radial outer section 113.

The rotor guiding structure 122 forms e.g. together with the stator guiding structure 121 the air inlet 104 of the cooling air 111 into the radial outer section 113 and the winding arrangement 103.

The rotor guiding structure 122 is mounted to the rotor device 101 and is rotatable together with the rotor device 101. Hence, the rotor guiding structure 122 rotates together with the rotor device 101. Alternatively, the rotor guiding structure 122 may be mounted to a non-movable fixing structure of the generator 100.

The rotor guiding structure 122 comprises a rotor air deflection sheet 123 that may be fixed to the rotor device 101 or to a static, non-movable fixing structure. The rotor air deflection sheet 123 extends from an axial surface of the rotor device (or of a static fixing structure) in the direction to the stator device 102. The rotor air deflection sheet 123 comprises an angle to the axial surface of the rotor device of 90°. The rotor air deflection sheet 123 may form a straight platelike element extending in a respective plane. Alternatively, the rotor air deflection 123 sheet may comprise a curved shape following the circumferential direction 109 (and having for example a centre of radius of curvature at the rotary axis 107).

As can be seen in Fig. 1, the air inlet opening 104 is formed between a free end of the rotor air deflection 123 closest to the stator device 102 and a free end of the stator guiding structure 121 closest to the rotor device 101. The air guiding arrangement 120 can be installed in the NDE side and the DE side of the generator 100.

**Fig. 2A** shows a schematic view of a generator 100 having three rotor air deflection sheets 123, 202 and a stator guiding structure 121.

The winding arrangement 120 is shown in further detail. The winding arrangement 120 describes a distributed winding generator 100. Hence, the winding arrangement 120 comprises respective conductive coils or windings 210, 220, 230, for example made of copper, that extend within slots in the surface of the stator device 101. At axial ends 105 of the stator device 102, the windings 210, 220, 230 extend into the radial outer section 113. Specifically, the loop of the windings 210, 220, 230 outside of the stator device 102 is denoted as winding head 211, 221, 231. In a distributed winding generator 100 three windings 210, 220, 230 are interleaved so that a winding head 211 of one winding 210 partially surrounds a section of another winding head 221 of another winding 220 outside of the stator device 200.

In the shown example, in order to provide the interleaving winding heads 211, 221, 231, one winding head 211 is bended 90° with respect to the axial direction 107 and forms a 90° winding. Another winding head 221 is bended approx. 45° with respect to the axial direction 107 and forms a 45° winding. Another winding head 231 is not bended with respect to the axial direction 107 and forms a 0° winding.

The stator air deflection sheet extends parallel to an end face 212 of a winding head 211 of a 90° winding 210 of the stator device 102 to form an air channel 201 between the end face 212 and the stator air deflection sheet. Along the circumferential direction 109, several flat small plates as stator air deflection sheet may be arranged near the 90° winding heads 111.

The end face 212 of the winding head 211 defines the face of a winding 210 that has the largest distance to the axial end face 105 of the stator device, where the winding section leaves the stator device 101. In other words, the end face 212 of a winding head 211 extends along the circumferential direction 109 and forms the winding loop and connects the two winding sections running along the stator device 102. Hence, the stator air deflection sheet fully or partially covers at a certain radial distance the end face 212 of a winding head 211 such that a small gap forming an airflow channel 201 is formed and hence a further nozzle effect for improving the air streaming through the airflow channel is provided.

The air guiding arrangement 120 in Fig. 2A comprises air deflection sheets 123 (e.g. a rotor guiding structure 122 formed by a rotor air deflection element 123 and a stator guiding structure 121). Cooling air 111 streams against the air guiding arrangement 120 in the direction from the radial inner section 112 to the radial outer section 113. Specifically, the air guiding arrangement 120 forms the air inlet opening 104. The air inlet opening 104 defines a reduced and smallest flow diameter (at least in axial direction 108) and a narrowing opening (smallest flow area), respectively, so that a nozzle effect may be generated by the air guiding arrangement 120.

Furthermore, the rotor guiding structure 122 comprises two further rotor air deflection sheets 202 being arranged spaced apart (along the radial direction 108) from each other and from the rotor air deflection sheet 123. The further rotor air deflection sheets 202 extend from the axial surface 114 of the rotor device 101 (or of a static fixing structure) in such a way that the further rotor air deflection sheets 202 are arranged spaced apart from a further end face 222, 232 of a further winding head 221, 231 to form a further air flow channel between the further end face 222, 232 of the further winding head 221,231 and the respective further rotor air deflection sheet 202. The further rotor air deflection sheets 202 are parallel to the rotor air deflection sheet 123 and comprise an angle to the axial surface of the rotor device 101 of 90°.

Hence, each further rotor air deflection sheet 202 comprise a free end closest to a respective end face 222, 232 so that between the end face 222, 232 and the free end of the respective rotor air deflection sheet 202 a narrow streaming diameter for the cooling air 111 is formed and hence a nozzle effect is provided.

Specifically, the further rotor air deflection sheet 202 has a shorter length l in axial direction 107 than the rotor air deflector sheet 123. Hence, if a (0°) winding head 231 extends more in axial direction 107 to the radial outer section than a (45°) winding head 221, the respective rotor air deflection sheet 202 having a free end at the (45°) winding head 221 is longer in axial direction 107 than the rotor air deflection sheet 202 closest to the (0°) winding head 231.

Specifically, the length of a radially inner rotor air deflection sheet 123 may be longer with respect to a length of a (adjacent) more radially outer rotor air deflection sheet 202. Specifically, in the shown example, the rotor air deflection sheet 202, which is placed at the radially outermost section, has the shortest (axial) length and the rotor air deflection sheet 123, which is placed at the radially innermost section, has the longest (axial) length. Hence, along a direction from a radial innermost section to a radial outermost section, the (axial) lengths of the rotor air deflection sheets 123, 202 have a decreasing trend. However, in exemplary embodiments, the lengths of adjacent rotor air deflection sheets 123, 202 may vary independently from each other along the axial direction 107.

Hence, a constant distance between the respective (axially) free end of a respective rotor air deflection sheet 123, 202 to a respective end face 222 can be provided with respect to another spaced apart free end of a respective further rotor air deflection sheet 123, 202 to another end face 232.

**Fig. 2B** shows a schematic view of a generator 100 similar to Fig. 2A but having as an example four rotor air deflection sheets 123, 202, 203 and a stator guiding structure 121.

The winding arrangement 120 is similar as in the embodiment shown in Fig. 2A. The stator air deflection sheet extends parallel to an end face 212 of a winding head 211 of a 90° winding 210 of the stator device 102 to form an air channel 201 between the end face 212 and the stator air deflection sheet. Along the circumferential direction 109, several flat small plates as stator air deflection sheet may be arranged near the 90° winding heads 111.

The air guiding arrangement 120 in Fig. 2B comprises air deflection sheets 123, 202, 203. Cooling air 111 streams first against the air deflection sheet 123 of the air guiding arrangement 120 in the direction from the radial inner section 112 to the radial outer section 113. Specifically, the air deflection sheet 123 of air guiding arrangement 120 forms the air inlet opening 104. The air inlet opening 104 defines a reduced and smallest flow diameter (at least in axial direction 108) and a narrowing opening (smallest flow area), respectively, so that a nozzle effect may be generated by the air guiding arrangement 120.

The further rotor air deflection sheets 202 comprises an angle α to the axial surface 114 of the rotor device 101 of less than 90°, e.g. between 45° to 60°.

Specifically, the rotor guiding structure 122 in Fig. 2A comprises two further rotor air deflection sheets 202 being arranged spaced apart (along the radial direction 108) from each other and from radial innermost rotor air deflection sheet 123. The further rotor air deflection sheets 202 extend from the axial surface 114 of the rotor device 101 (or of a static fixing structure) in such a way that the further rotor air deflection sheets 202 are arranged spaced apart from each other. The further rotor air deflection sheets 202 are parallel to the rotor air deflection sheet 123 and comprise an angle α to the axial surface 114 of the rotor device 101 of less than 90°, in particular between 45° to 60°.

Additionally, a further rotor air deflection sheet 203 at the radial outermost location is provided, which comprises an angle α to the axial surface 114 of the rotor device 101 of 90°.

Specifically, the further rotor air deflection sheet 203 has a shorter length l in axial direction 107 than the rotor air deflector sheet 123 and the further rotor air deflection sheets 202. However, also four or more rotor air deflection sheets 123, 202, 203 may be provided, so that e.g. more rotor air deflection sheets 123, 202, 203 than winding heads 211, 221, 231.

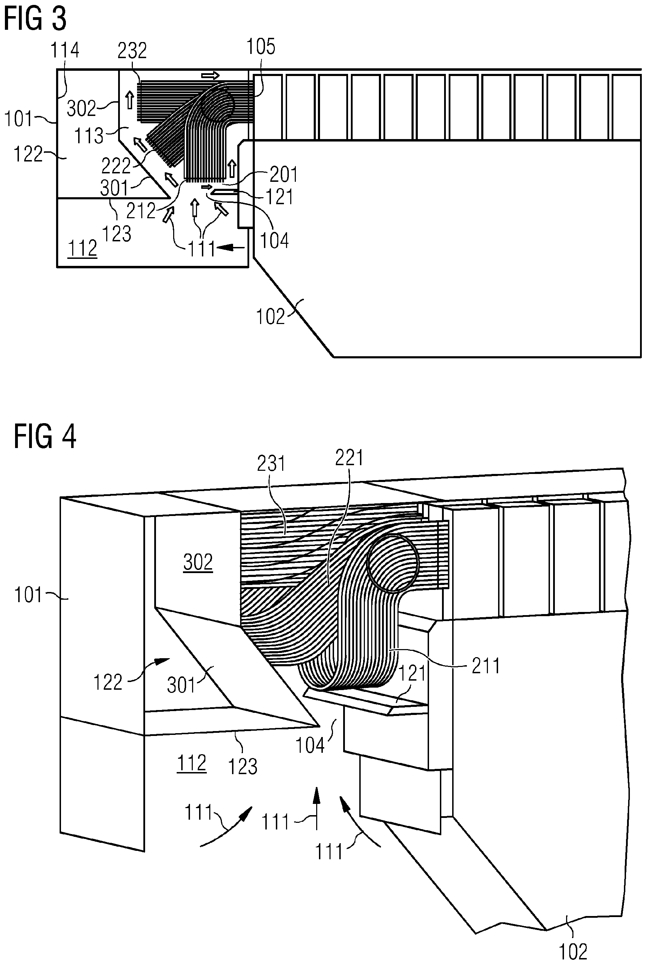

**Fig. 3** and **Fig. 4** shows a schematic view of a generator having several rotor air guiding surfaces according to an exemplary embodiment of the present invention.

Similar to the above-described embodiments, stator air deflection sheets of the stator guiding structure 121 are provided that extends parallel to an end face 212 of a winding head 211 of a 90° winding 210 of the stator device 102 to form an air channel 201 between the end face 212 and the respective stator air deflection sheet. Along the circumferential direction 109, several flat small plates as stator air deflection sheets may be arranged near the 90° winding head 111.

The rotor guiding structure 122 comprises a rotor air deflection element 123 extending from the rotor device 101 to the stator guiding structure 121 for forming the inlet opening 104. Furthermore, a rotor air guiding surface 301 extends from the rotor air deflection sheet 123 in a radial direction 108 in such a way that the rotor air guiding surface 301 is arranged spaced apart from an end face 222 of a winding head 221 of a (45°) winding 220 to form an air flow channel between the end face 222 of the winding head 221 and the rotor air guiding surface 301.

The rotor air guiding surface 301 extends from the rotor air deflection sheet 123 in a radial outer direction 108 so as to partially envelope an end face 222 of the winding head 221 such that an air channel is formed between the air guiding surface 301 and the end face 222. The rotor air guiding surface 301 may extends along the circumferential direction 109 and may be separated in sections or may form a kind of circular ring surface.

The rotor air guiding surface 301 is formed parallel with respect to the end face 222 of the (45°) winding 220 closest to the rotor air guiding surface 301.

The rotor guiding structure 122 comprises a further rotor air guiding surface 302 arranged at a radial outer end of the rotor air guiding surface 301. The further rotor air guiding surface 302 is arranged spaced apart from a further end face 232 of a further winding head 231 of a further (0°) winding 230 to form a further air flow channel between the further end face 232 and the further rotor air guiding surface 302. Hence, the rotor air guiding surface 301 and the further rotor air guiding surface 302 may form together an inner wall between the rotor air guiding sheet 123 and the radial outer end of the radial outer section of the cooling volume Vc. The rotor air guiding surface 301 and the further rotor air guiding surface may comprise an angle with respect to each other between 135° to 170°. Hence, the air guiding arrangement is tailored to the shape of distributed winding heads 211, 221, 231.

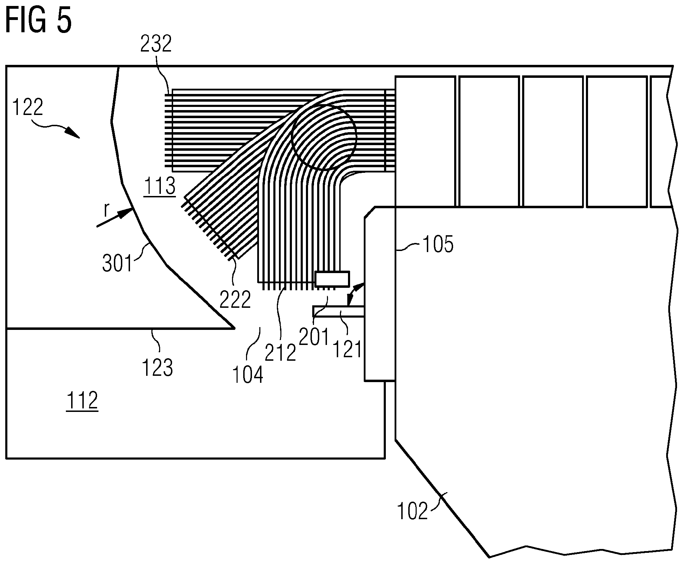

**Fig. 5** shows a schematic view of a generator having a curved rotor air guiding surface 301 according to an exemplary embodiment of the present invention. The rotor air guiding surface 301 a form an overall curved surface passing the end faces 222, 223 of the winding heads 221, 231, such that cooling air 111 is flowable through the air inlet opening 104 and further along the overall curved rotor air guiding surface 301. For example, a curved plate may be used having an axis of curvature (on which the center of curvatures for the curved plate sections are arranged) approx. along the circumferential direction 109. Additionally stator air deflection sheets of the stator guiding structure 121 are provided that extends parallel to an end face 212 of a winding head 211 of a 90° winding 210 of the stator device 102 to form an air channel 201 between the end face 212 and the respective stator air deflection sheet. Along the circumferential direction 109, several flat small plates as stator air deflection sheets may be arranged near the 90° winding head 111.

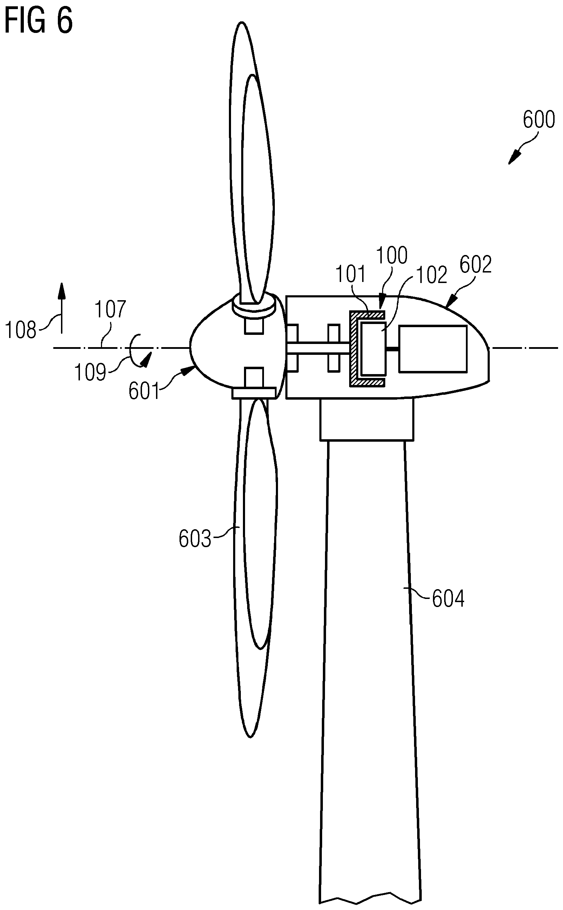

**Fig. 6** shows a schematic view of a wind turbine 600 having a generator 100 according to an exemplary embodiment of the present invention. The wind turbine comprises a tower 604 supporting a nacelle 602. Inside the nacelle 602, a generator 100 according to the present invention is arranged. The generator 100 comprises an inner stator device 102 and an outer rotor device 101 which comprises a rotary axis 107 defining the axial direction and which rotates around the inner stator device 102. In direct drive wind turbines, a hub 601 of the wind turbine 600 to which the blades 603 are mounted, is directly coupled to the rotor device 101. The rotor device 101 comprises a cylindrical rotor housing and a plurality of magnet means being arranged at an inner surface of the rotor housing in several rows extending parallel to an axis of rotation 107 of the rotor device 101. The stator device 102 comprises the respective parts of the generator that are non-movable. Specifically, the stator device 102 comprises the winding arrangement 103. The generator 100 further comprises the air guiding arrangement 120 arranged within the cooling volume for separating the cooling volume into a radial inner section 112 and a radial outer section 113 as described in detail above.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Generator (100) for a wind turbine, the generator (100) comprises
a rotor device (101) rotatable around a rotary axis (107),
a stator device (102) comprising a winding arrangement (103),
wherein between an axial end of the stator device (102) and the rotor device (101) a cooling volume is formed, and
an air guiding arrangement (120) arranged within the cooling volume for separating the cooling volume into a radial inner section (112) and a radial outer section (113), wherein the air guiding arrangement (120) forms an air inlet opening (104), such that cooling air (111) is flowable from the radial inner section (112) against the air guiding arrangement (120) and through the air inlet opening (104) into the radial outer section (113),
wherein the winding arrangement (103) extends from the axial end of the stator into the radial outer section (113).

2. Generator (100) according to claim 1,
wherein the air guiding arrangement (120) comprises a stator guiding structure (121) extending from the stator device (102) in the direction to the rotor device (101),
wherein the stator guiding structure (121) is mounted to the stator device (102) in particular between the radial inner section (112) and the radial outer section (113).

3. Generator (100) according to claim 2,
wherein the stator guiding structure (121) comprises a stator air deflection sheet extending from an axial surface (105) of the stator device (102),
wherein the stator air deflection sheet comprises an angle to the axial surface (105) of the stator device (102) between 45° to 135°, in particular between 60° and 120°, more in particular 90°.

4. Generator (100) according to claim 3,
wherein the stator air deflection sheet extends in circumferential direction (109) around the stator device (102),
wherein the stator air deflection sheet forms a circumferential ring structure, or
wherein the stator air deflection sheet comprises a plurality of sheet sections arranged spaced apart from each other along the circumferential direction (109).

5. Generator (100) according to claim 3 or 4,
wherein the stator air deflection sheet extends parallel to an end face (212) of a winding head (211) of a winding (210) of the stator device (102) to form an air flow channel (201) between the end face (212) and the stator air deflection sheet.

6. Generator (100) according to one of the claims 1 to 5, wherein the air guiding arrangement (120) comprises a rotor guiding structure (122),
wherein the rotor guiding structure (122) extends in a direction from the rotor device (101) in the direction to the stator device (102),
wherein the rotor guiding structure (122) is arranged between the radial inner section (112) and the radial outer section (113) .

7. Generator (100) according to claim 6,
wherein the rotor guiding structure (122) is mounted to the rotor device (101) and is rotatable together with the rotor device (101), or
the rotor guiding structure (122) is mounted to a non-movable fixing structure of the generator (100).

8. Generator (100) according to claim 6 or 7,
wherein the rotor guiding structure (122) comprises a rotor air deflection sheet (123) extending from an axial surface (114) of the rotor device (101),
wherein the rotor air deflection sheet (123) comprises an angle to the axial surface (114) of the rotor device (101) between 45° to 135°, in particular between 60° and 120°, more in particular 90°.

9. Generator (100) according to claim 8,
wherein the rotor guiding structure (122) comprises a rotor air guiding surface (301) extending from the rotor air deflection sheet (123) in a radial direction (108) in such a way that the rotor air guiding surface (301) is arranged spaced apart from an end face (222) of a winding head (221) of a winding (220) to form an air flow channel between the end face (222) of the winding head (221) and the rotor air guiding surface (301).

10. Generator (100) according to claim 9,
wherein the rotor air guiding surface (301) has a curved shape such that the distance to the end face (222) varies along the radial direction (108), and/or
wherein the rotor air guiding surface (301) is formed parallel with respect to the end face (222) of the winding (220) closest to the rotor air guiding surface (301).

11. Generator (100) according to claim 9 or 10,
wherein the rotor guiding structure (122) comprises a further rotor air guiding surface (302) arranged at a radial outer end of the rotor air guiding surface (301),
wherein the further rotor air guiding surface (302) is arranged spaced apart from a further end face (232) of a further winding head (231) of a further winding (230) to form a further air flow channel between the further end face (232) and the further rotor air guiding surface (302).

12. Generator (100) according to claim 11,
wherein the rotor air guiding surface (301) and the further rotor air guiding surface (302) form together an overall curved surface passing the end face (222) of the winding head (221) and the further end face (232) of the further winding head (231), such that air is flowable through the air inlet opening (104) and further along the overall curved surface.

13. Generator (100) according to claim 8,
wherein the rotor guiding structure (122) comprises a further rotor air deflection sheet (202) being arranged spaced apart from the rotor air deflection sheet (123) in radial direction (108) .

14. Generator (100) according to claim 13,
wherein further rotor air deflection sheet (202) has a different length, in particular a shorter length, in axial direction than the rotor air deflector sheet (123).

15. Method of operating a generator (100) for a wind turbine according to one of the claims 1 to 15, the method comprising
providing cooling air (111) flowing from the radial inner section (112) against the air guiding arrangement (120) and through the air inlet opening (104) into the radial outer section (113).
